# EUROPEAN PATENT SPECIFICATION

(11) **EP 1 626 015 B1**
(45) Date of publication and mention of the grant of the patent: **21.05.2008**
(21) Application number: 05077352.2
(22) Date of filing: 25.02.2004
(51) Int. Cl.: B65G 25/06

(54) **Drive units and drive assemblies**
Antriebseinheiten und Antriebsvorrichtungen
Unités d'entraînement et assemblages d'entraînement

(30) Priority: 26.02.2003 US 375225
(43) Date of publication of application: 15.02.2006
(62) Divisional of application: 04075609.0
(73) Proprietor: Keith Investments LLC, Madras, OR 97741 (US)
(72) Inventor: Foster, Raymond K., Madras, OR 97741 (US)
(74) Representative: Hoorweg, Petrus Nicolaas

(56) References cited:
- EP-A- 0 721 901

## Description

### Technical Field

This invention relates to a linear hydraulic drive unit according to the preamble of claim 1.

### Background of the invention

My U.S. Patent No. Re 35,022, granted August 22, 1995, and entitled Reduced Size Drive/Frame Assembly For Reciprocating Floor Conveyor discloses a drive assembly composed of a small mounting frame, three drive units and three transverse drive beams, one for each drive unit. My U.S. Patent No. 5,638,943, granted June 17, 1997 and entitled Drive Assembly For Reciprocating Slat Conveyor discloses a mounting frame that includes a downwardly extending center cavity region for receiving the linear hydraulic drive units.

My U.S. Patent No. 5,605,221, granted February 25, 1997, discloses a drive assembly (Figs. 32-34) comprising a plurality of drive units, a transverse drive beam for each drive unit, and mounting structure for the drive units. Other prior art drive units and mounting structure are disclosed by my U.S. Patent No. 5,353,918, granted October 11, 1994, by U.S. Patent No. 5,263,573, granted November 13, 1993 to Olaf A. Hallstrom, and by European patent application EP 0 721 901 A1, filed by Cargo Handling Systems B.V. on January 15, 1996. All of these patents should be carefully considered for the purpose of putting the present invention into proper perspective relative to the prior art.

### Brief Summary of the Invention

According to the invention, the linear hydraulic drive unit has a transverse frame member having a downwardly directed recess, a hydraulic cylinder, the hydraulic cylinder includes a rod-end member having a base, a radial end wall extending upwardly from a portion of said base, and a key extending above another portion of said base and axially from the radial end wall. The rod-end member also includes a piston rod opening extending through the key and through a portion of the base. The rod-end member further includes a nook above the base and the key. The nook is bounded on one side by the radial end wall. The base includes a pair of shoulders, one on each side of the key. A pair of bolt-receiving openings extends through the base and the shoulders. A transverse frame member at the rod end of the hydraulic cylinder includes a key-receiving recess adapted to snugly receive the key. This frame member includes a side surface that is contiguous the radial end wall of the rod-end member when the key is in the key recess. The frame member includes a pair of shoulders, one on each side of the key recess. The frame member shoulders confront the shoulders on the rod-end member when the key is in the key recess and the side surface is contiguous the radial end wall. The frame member shoulders have bolt-receiving openings therein that are alignable with the bolt-receiving openings in the rod-end member when the key is within the key recess and the side surface of the frame member is contiguous the radial end wall of the rod-end member. Bolts extend through the bolt-receiving openings in the rod-end member and the bolt-receiving openings in said frame-member shoulders. The bolts connect the rod-end member of the hydraulic cylinder to the transverse frame member.

Other objects, advantages and features of the invention will become apparent from the description of the best mode set forth below, from the drawings, from the claims and from the principles that are embodies in the specific structures that are illustrated and described.

### Brief Description of the Several Views of the Drawing

Like reference numerals are used to designate like parts throughout the several views of the drawing, and:
Fig. 1 is a pictorial view of a drive assembly for a reciprocating slat conveyor, taken from above and looking toward one end and one side of the assembly;
Fig. 2 is another pictorial view of the drive assembly shown by Fig. 1, such view being taken from below and looking towards the opposite end and the opposite side of the assembly from what is shown in Fig. 1;
Fig. 3 is a pictorial view of the right end portion of Fig. 2, showing the hydraulic cylinders spaced below the mounting frame and the mounting bolts spaced from the ends of the cylinders;
Fig. 4 is a pictorial view of one of the drive units, taken from below the drive unit and showing the drive rod detached from the piston rod of the cylinder;
Fig. 5 is an enlarged scale fragmentary view of the region of the coupler that connects the drive rod to the piston rod;
Fig. 6 is a fragmentary view of the left end portion of Fig. 2, with the bearing assembly for one of the push rods exploded apart and spaced from the transverse frame member at the end of the mounting frame;
Fig. 7 is a longitudinal sectional view taken through the drive assembly, with some parts shown in side elevation;
Fig. 8 is an enlarged scale view of the left end portion of Fig. 7;
Fig. 9 is an end view of the mounting frame at the end where the hydraulic cylinders are connected to the mounting frame;
Fig. 10 is a bottom plan view of Fig. 9,
Fig. 11 is an enlarged scale fragmentary view of the right end portion of Fig. 7, but facing in the opposite direction from Fig. 7, such view showing the outer end portion of the drive rod extending through a bearing that is connected to the transverse end member of the mounting frame at the drive rod end of the drive assembly;
Fig. 12 is a transverse sectional view taken substantially long line 12-12 of Fig. 8;
Fig. 13 is a transverse sectional view taken substantially along line 13-13 of Fig. 8;
Fig. 14 is a transverse sectional view taken substantially along line 14-14 of Fig. 8;
Fig. 15 is a view similar to Fig. 3, but showing drive units that have continuous piston rods;
Fig. 16 is a view substantially like Fig. 4 but of the drive unit shown by Fig. 15;
Fig. 17 is a view generally like Fig. 16 but showing a modified construction of the coupling between the piston rod and the drive rod;
Fig. 18 is an enlarged scale view of the coupler assembly portion of Fig. 17, such view showing the fitting that is attached to the drive rod in side elevation and showing the drive rod and the member that is attached to the piston rod in longitudinal section;
Fig. 19 is a view similar to the drive unit portion of Fig. 8;
Fig. 20 is an enlarged scale view of the left end portion of Fig. 19;
Fig. 21 is a pictorial view of a modified construction of the transverse frame member at the cylinder end of the drive assembly, such view being taken from above and looking towards one end, the outer side and the top of the frame member;
Fig. 22 is an end view of the frame member shown by Figs. 21-24;
Fig. 23 is a top plan view of the frame member shown by Figs. 21, 22 and 24;
Fig. 24 is a side elevational view of the frame member shown by Figs. 21-23; and
Fig. 25 is a pictorial view of the drive assembly shown by Fig. 1, with the modified construction of the transverse frame members.

### Detailed Description of the Invention

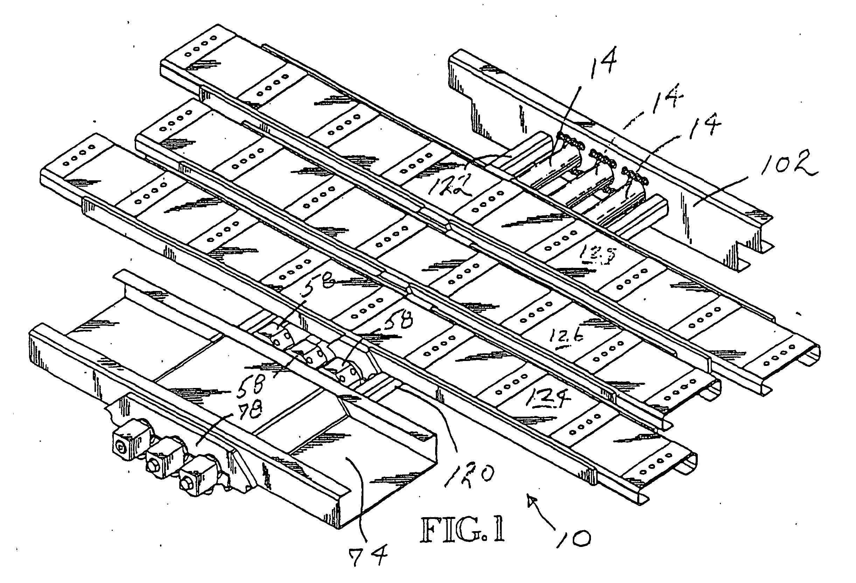

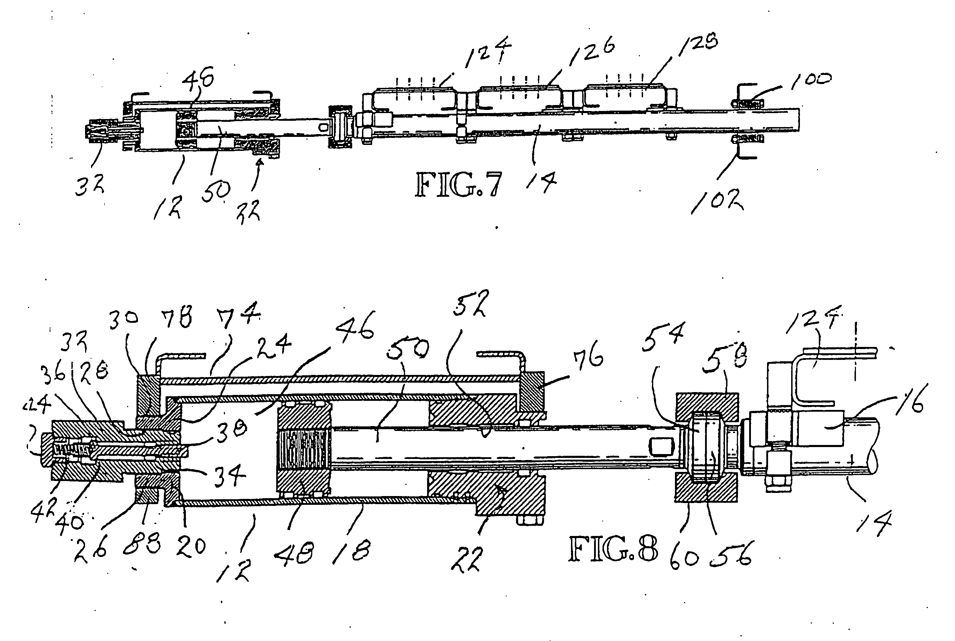

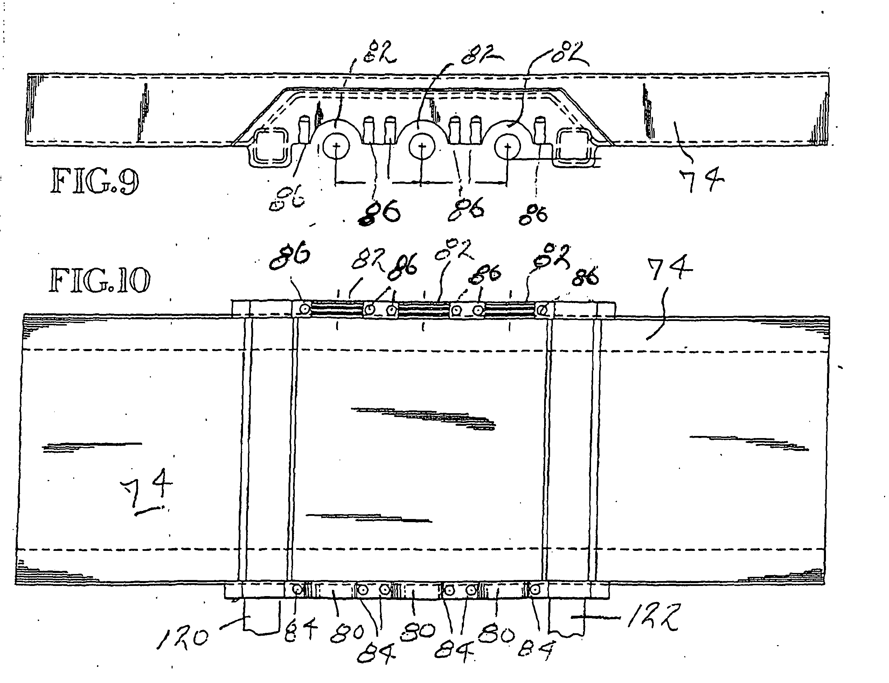

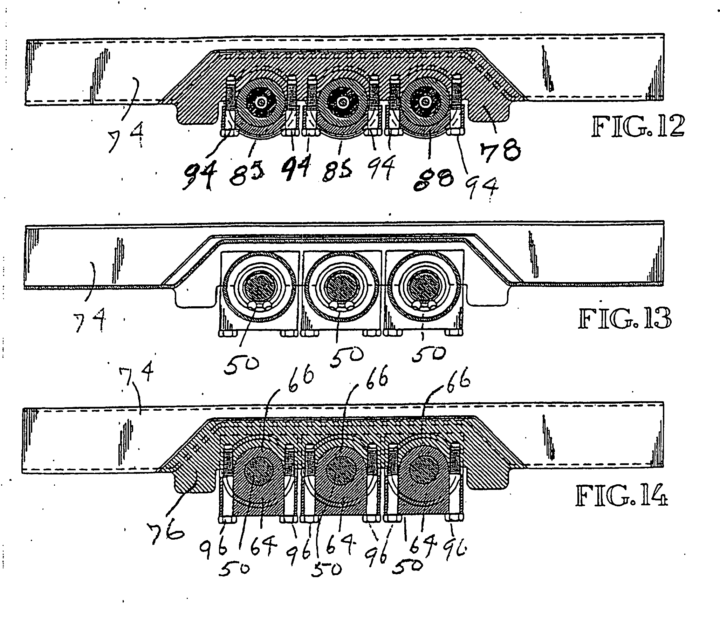

Figs. 1-14 show a drive assembly 10. It comprises three drive units, each comprising a linear hydraulic cylinder 12 and a push-rod 14. Each push-rod 14 includes a semi-cylindrical fitting 16 that is welded to the push-rod 14. Referring to Fig. 8, each linear hydraulic cylinder 12 includes a tubular sidewall 18, a closed end fitting 20 and a rod-end fitting 22. Closed end fitting 20 and closed radial end wall 24 and a tubular nipple 26 connect to the end wall 24 and project axially outwardly from it. Each nipple 26 includes an axial center opening 28. Opening 28 is internally threaded. The outer periphery 40 is externally threaded. An end fitting 32 has an externally threaded inner end portion 34 that threads into the center opening 28. Fitting 32 has a center opening that receives a valve plug 36 that includes a valve operator 38. The valve plug 36 is biased towards a valve seat 40 by a spring 42. Spring 42 is positioned between the valve plug 36 and an end cap 44. End cap 44 includes an externally threaded inner end portion that threads into an internally threaded center opening in the fitting 32. The fitting 32 provides a center passageway through which hydraulic fluid flows into and out from the working chamber 46.

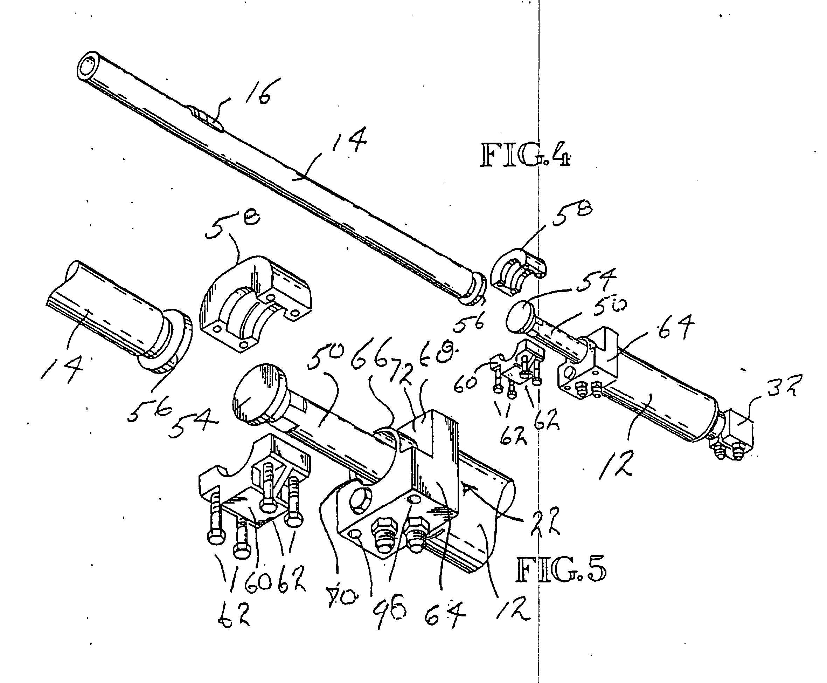

A piston head 48 is located inside of the tubular sidewall 48. A piston-rod 50 has an inner end that is connected to the piston-head 48. Piston-rod 50 extends from the piston-head 48 through the center opening 52 in the rod-end member 22. Outside of the piston chamber, the piston-rod 50 extends to an enlarged end member 54. In this embodiment, another end member 56 is connected to the adjacent end of the push-rod 14. A two-part clamp 58, 60 serves to connect the two members 54, 56 together. The clamp parts 58, 60 are secured together by a plurality of bolts 62, as shown by Figs. 4 and 5.

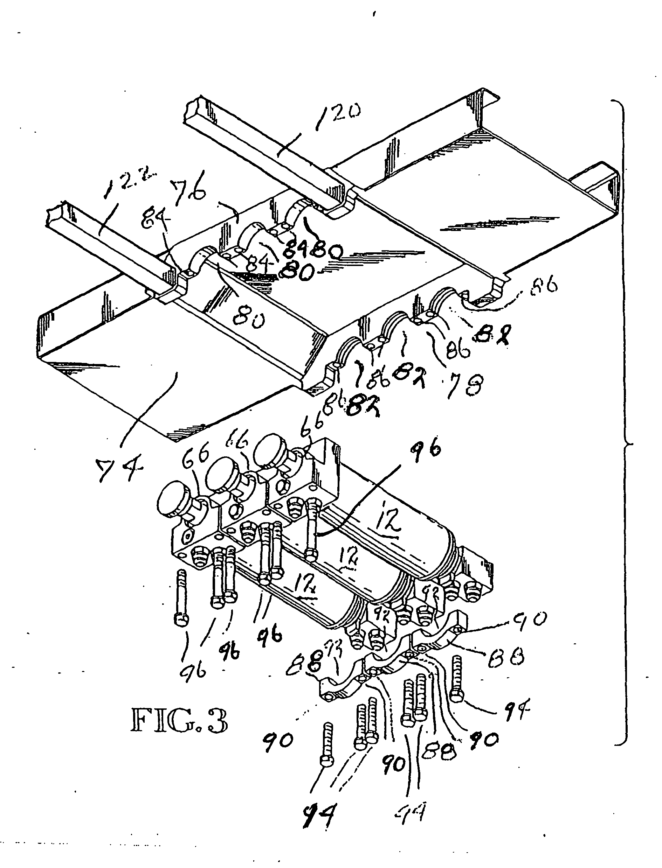

Referring to Fig. 5, the rod end of member 22, comprises a base 64, a radial wall 68 and a semi-cylindrical key 66. The piston-rod 50 extends through an opening 70 that extends through the key 66 and a portion of the base 64. A nook 72 is formed above the base 64 and the key 66 and adjacent the wall 68. Referring to Fig. 3, the linear hydraulic motors or cylinders 12 are connected to a transverse mounting frame 74. Frame 74 includes a rod-end frame member 76 and a closed end frame member 78. Each of these frame members 76, 78 includes a plurality of downwardly opening recesses 80, 82 one for each linear hydraulic motor 12. The recesses 80 are sized and shaped to receive the keys 66. When the keys 66 are within the recesses 80, the walls 68 are contiguous the inner surface of the frame member 76. This is shown by Fig. 8, for example.

The upper halves of the nipples 26 are received within the recesses 82. Frame member 76 includes bolt-receiving openings 84. Frame member 78 includes bolt-receiving openings 86. Clamp members 88 are provided for the closed ends of the cylinders 12. Each clamp member 88 includes a pair of bolt-receiving openings 90. When the upper portions of the nipples 32 are within the recesses 82, the recesses 92 in the clamps 88 are fittable over the lower portions of the nipples 26. Then the bolts 94 are inserted through first the openings 90 and then into the openings 86. The openings 83 are internally threaded. When the bolts 94 are tightened, they thread into the openings 86. This causes the nipples 26 to be clamped firmly between the two sets of recesses 82, 92. The recesses 82, 92 and the nipples 26 have interlocking portions that serve to prevent movement of the cylinders 12 relative to the mounting frame 72. The interlocking portions may be alternating peaks and valleys. The peaks in the recesses 82, 92 fit within valleys formed in the nipples 26. Ridges on the nipples 26 fit in the valleys in the recesses 82, 92. When the bolts 94 are tightened, the interlocking ridges and valleys prevent relative movement of the cylinders 12 and the frame member- 74 in the direction of applied force.

When the nipples 26 are in the recesses 82, the keys 66 are in the recesses 80. Bolts 96 extend through openings 98 (Fig. 5) in the bases 64. The upper ends of the bolts 96 are threaded and they screw into the openings 84 which are internally threaded. When the bolts 96 are tightened, the end members 22 are secured to the frame member 76.

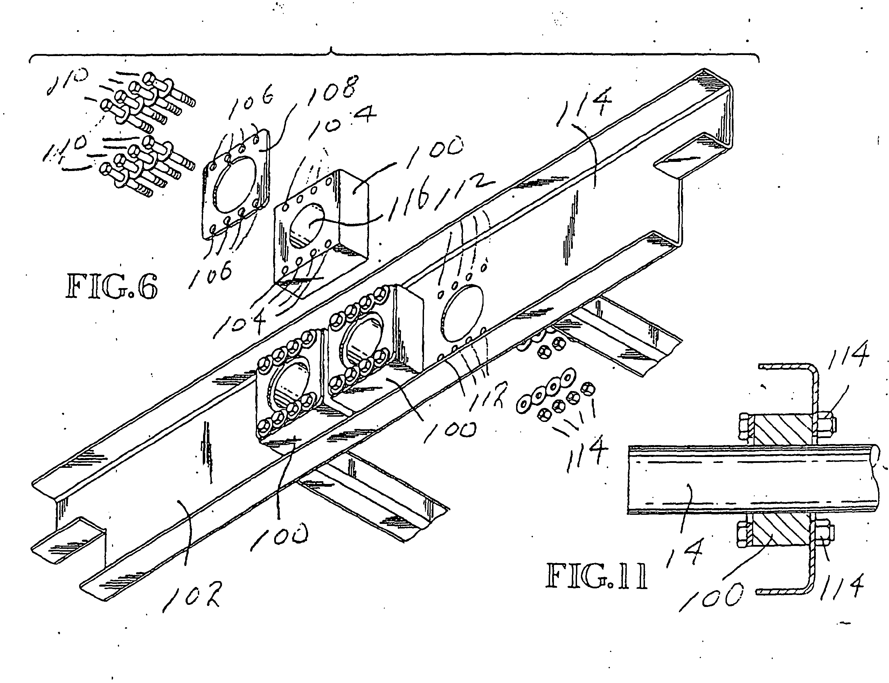

The ends of the push rods 14 that are opposite the piston-rods 50 extend through bearing blocks 100 that are secured to transverse mounting frame 102. As best shown by Figs. 6 and 11, the bearing blocks 100 are blocks of plastic, preferably, they are constructed from a high molecular weight resinous material referred to as umhw plastic. This material is readily available, is strong, is easily machined to the desired shape, and has exceptionally low surface friction. It is known to be an excellent bearing material. In the illustrated embodiment, eight openings 104 are formed in each block 100. The same number of openings 106 are formed in a metal cover plate 108. The openings 106 are aligned with the openings 104. A bolt 110 extends through a pair of aligned openings 104, 106 and further extends through another opening 112 formed in the web portion 114 of the frame member 102. The threaded ends of the bolts 110 pass through the openings 112 and each receives a nut 114, as shown by Fig. 11. Bearing blocks 100 are firmly connected to the frame member 102. The openings 116 and the bearing blocks 100 are sufficiently long to provide a substantial amount of support for the end portion of the push-rod 14.

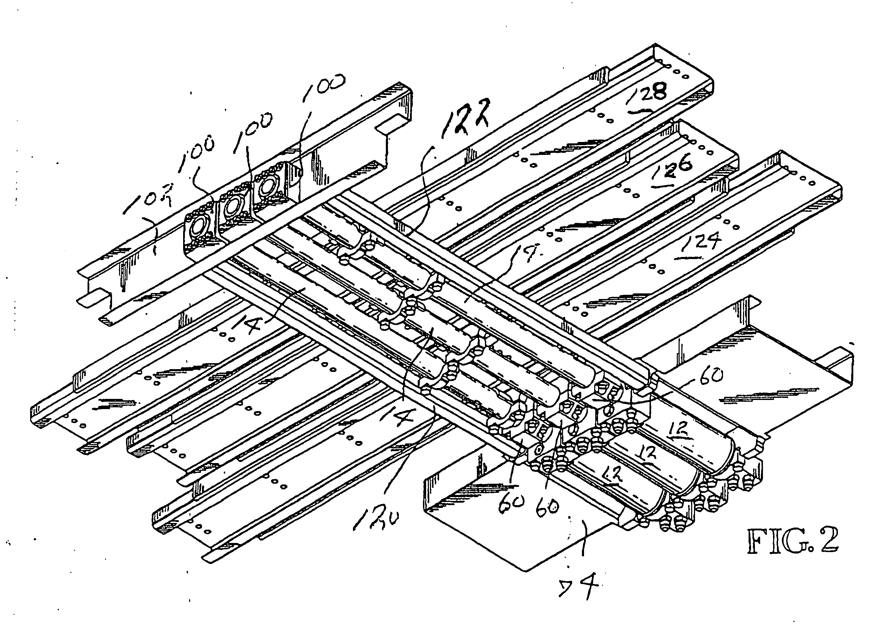

As clearly shown by Fig. 2, longitudinal frame members 120, 122 extend between and interconnect the frame members 74, 102. The drive assembly 10 includes three transverse drive beams 124, 126, 128, one for each drive unit. The transverse drive beams 124, 126, 128 are connected to the push-rods 14, in a known manner.-Upper clamp members are secured to the drive beams 124, 126, 128 above the push-rods 14. Removable clamps are provided the push-rods 14. Bolts are used to connect the lower clamp members to the upper clamp members. The members 16 on the push-rods 14 prevent unwanted axial movement of the beams 124, 126, 128 relative to the push-rods 14. The members 16 interlock with the upper clamp members on the beams 124, 126, 128 and prevent relative movement in the direction of applied force. This concept, including the construction of the members 16, is clearly disclosed in my U.S. Patent No. Re. 35,022, granted August 22, 1995, and entitled "Reduced Size Drive/Frame Assembly For A Reciprocating Floor Conveyor". See also the structure in my U.S. Patent No. 5,996,774, granted December 7, 1999 and entitled Drive Beam To Drive Unit Connections.

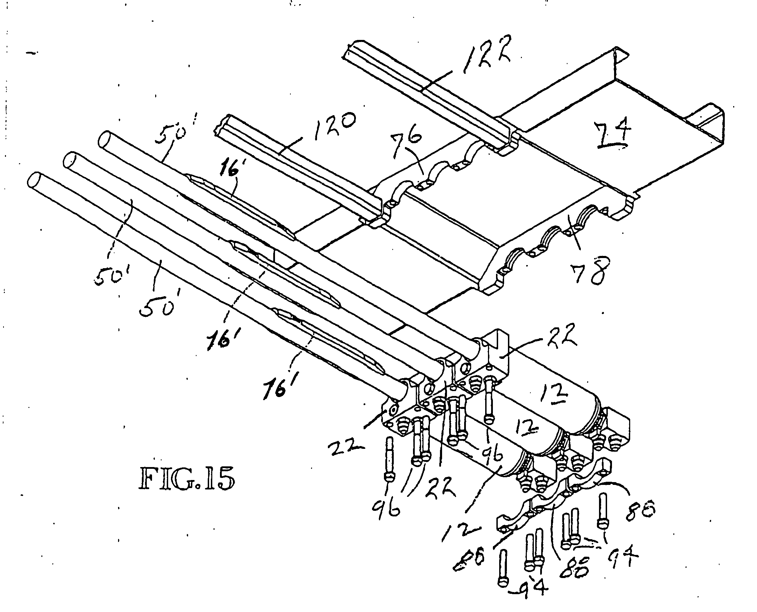

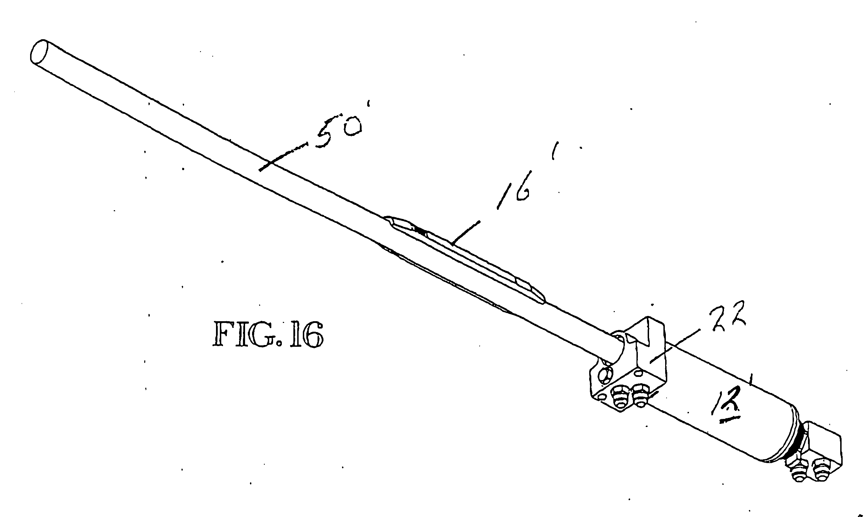

Figs. 15 and 16 show an embodiment in which the drive units have continuous piston-rods 50'. The ends of the rods 50' that are inside of the cylinders 12 are connected to piston-heads within the cylinder bodies, such as in the manner shown by Fig. 8. The difference is, instead of being connected to a push-rod, by some sort of joint structure, the piston-rod 50' extends outwardly from the piston-head 48 and itself serves as the push-rod. Each piston-rod 50' may be a single, continuous member. Or, it may be a continuous member made up of parts that are welded or otherwise connected together. Each piston-rod 50' is provided with a member 16' that interlocks with one of the upper clamp members that is attached to the related transverse beam 124, 126, 128. Ribs in valleys or some other suitable structure on the member 16' interlock with complementary ribs and valleys or other structure on the upper clamp parts.

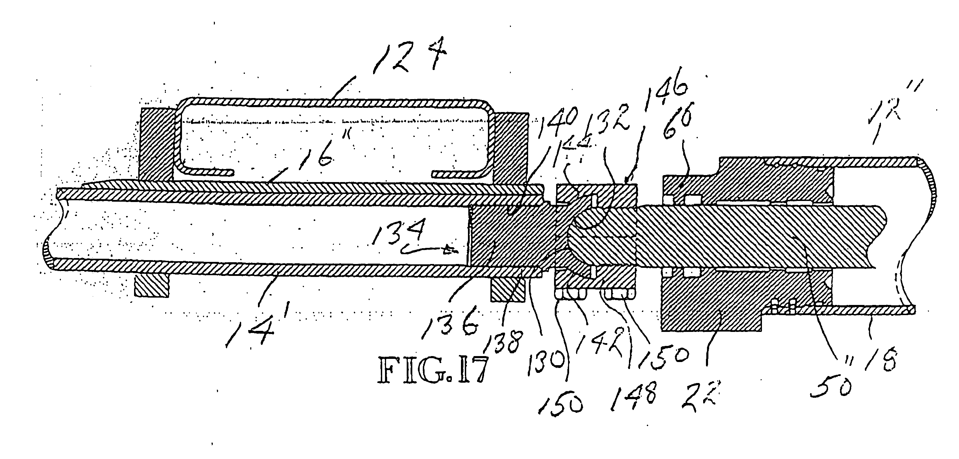

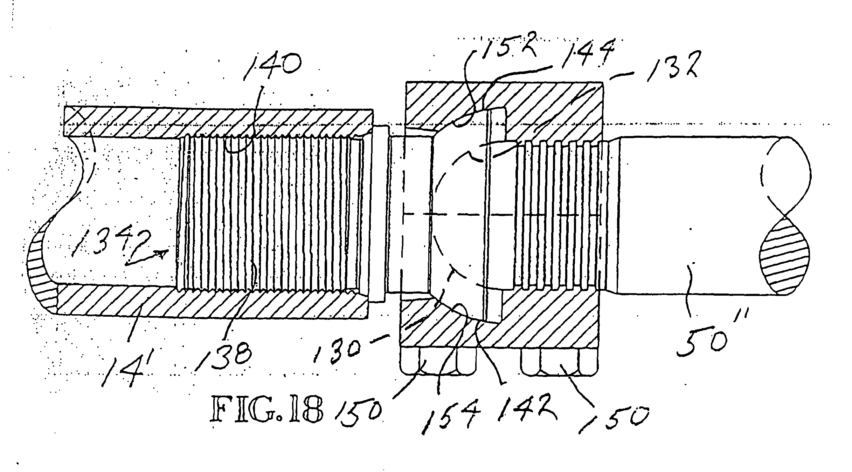

Figs. 17-20 relate to another embodiment in which each drive unit includes a push-rod 14' that is connected to a piston-rod 50". The outer end of the piston-rod 50' includes a convex end shape 130 that is of substantially spherical curvature. Shape 130 fits into a concave end cavity 132 of complementary curvature. That is, cavity 132 is concave and the curvature is a substantially spherical curvature. The cavity 132 is formed in the outer end of a member 134 that has an inner end portion 136 that is cylindrical and is externally threaded. The threads 138 mesh with complementary threads 140 that are formed in an end portion of the push-rod 14'. The concave surface 132 is a part of a cup-shaped member 142 that has a convex surface 144 on its outside. A coupler 146 is attached to the outer end of the piston-rod 50". Coupler 146 may be composed of two members, very similar to the members 58, 62 shown in Fig. 5. Piston-rod 50" includes circumferentially extending ribs and valleys on its outer end portion that is immediately inwardly of the convex surface 130. The members 146, 148 have semi-cylindrical portions with complementary ribs and valleys that engage the ribs and valleys of the piston-rod 50" when the coupler parts 146, 148 are connected together and secured to the piston-rod 50". Members 146, 148 are connected together by bolts 150. The coupler parts 146, 148 include an annular wall portion that surrounds the cup-shaped end portion on member 134. They have concaved surfaces 152, 154 (Fig. 18) that match the curvature of the surfaces 142, 144. In other words, surfaces 152, 154 have a substantially spherical curvature. The surfaces 130, 132, 142, 144, 152, 154 all share the same center or curvature. As a result, there can be universal pivotal movement of the push-rod 14' and the member 134 relative to the piston-rod 50" and the members 146, 148, such pivotal movement occurring about the shared center of curvature.

In the embodiment of Figs. 17-20, the cylinder 12" may be fixed against movement relative to its mounting frame 74 and the outer end of the push-rod 14' may be held for a substantially straight line movement through the bearing blocks 100, while some limited pivotal movement is allowed by the connector between the two rods. The end member 22 provides a long bearing support of the piston-rod 50". As a result, the cylinder 12" can withstand substantial side loading imposed by weight on the floor acting on the transverse beam 124 and the push-rod 14'.

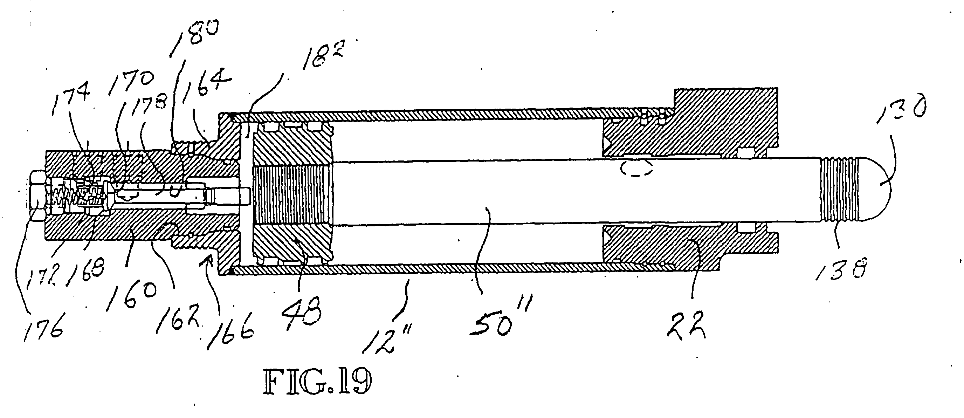

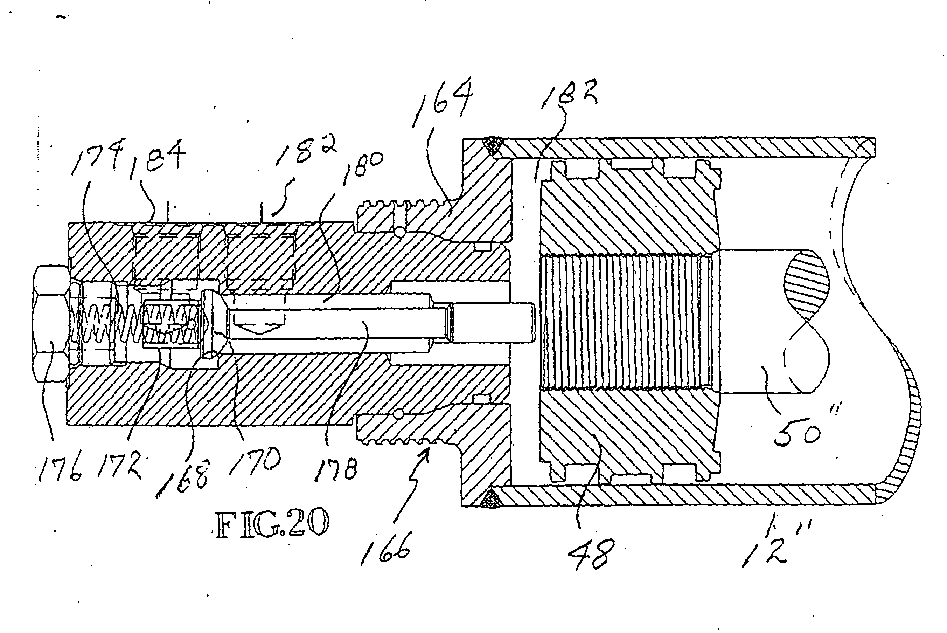

Referring to Figs. 19 and 20, in this embodiment, a fitting 160 fits within an axial socket 162 formed in the nipple 164 that is a part of the end member 166 at the closed end of the cylinder 12". In this embodiment, either a lockwire connection or a threaded connection is used for securing the member 160 to the member 164. Member or fitting 160 includes a valve seat 168 and a valve plug 170 that moves towards and away from the valve seat 168. A cup 172 may be provided outwardly of the valve plug 170. A compression spring 174 may extend into this cup 172. The opposite end of the spring 174 may make engaging contact with a removable plug 176. When the parts are in the position shown by Fig. 19, the spring 174 functions to urge the valve plug 170 against the valve seat 168. A valve operator 178 is connected to the valve plug 170 on the side thereof opposite the cup 172. Operator 178 extends from the valve plug 170, axially through passageway 180 and the member 160 and at its inner end protrudes into the working chamber 182. When the piston-head 48 and piston-rod 50" are retracted, the side of the piston-head opposite the rod 50" will contact the end of the operator 170. As piston-head 48 moves closer towards the end of the working chamber 182, it moves the operator 178 with it. Operator 178 in turn moves valve plug 170 away from the valve seat 168, opening a fluid passageway between a side port and member 160 and-the center passageway 180. When the valve plug 170 is against the valve seat 168, there is communication between side port 182 and passageway 180. The valve plug 160 blocks communication between side port 184 and passageway 180. However, when the operator 178 is depressed, and valve plug 170 is unseated form the seat 168, there will be communication between side port 184 and passageway 180.

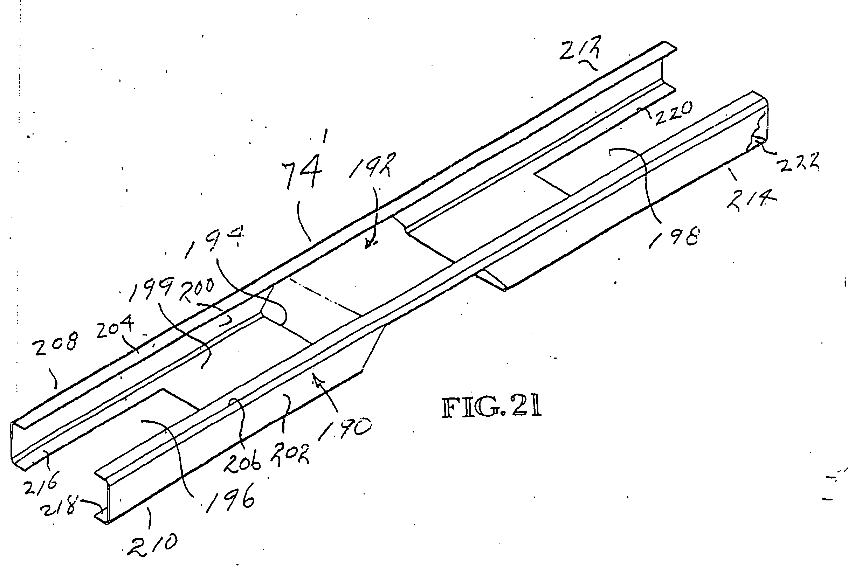

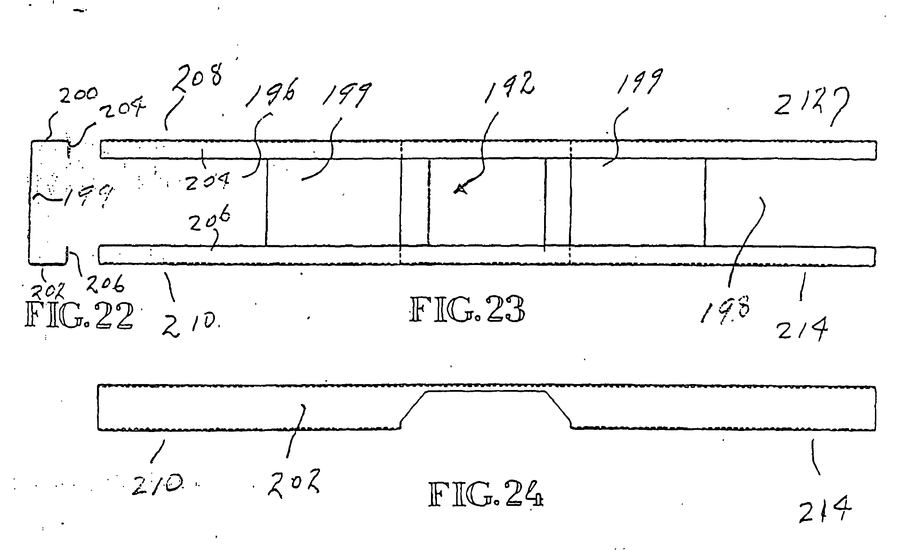

Figs. 21-25 show a modified frame structure that can be used by any of the above described embodiments. As previously described, the frame structure comprises two transverse mounting frame members 74', 102'. In the earlier embodiments, the frame members 74, 102 are of a length to be used with a center frame trailer. The ends of the frame members 74, 102 are connected to the two longitudinally extending mainframe beams. Then, cross-frame members are connected to the ends of the frame members 74, 102. These cross-frame members extend outwardly from the ends, of the frame members 74, 102 to the sidewall region of the trailer or other installation in which the drive assembly is mounted. In the embodiment of Figs. 21-25, the two frame members 74', 102' are constructed to include the cells. Referring to Fig. 21, frame member 74' of two-piece construction. The pieces or members are designated 190, 192. By way of typical and therefore non-limitative example, member 190 may be constructed from Swedish steel measuring 3/16 inch thick. Member 192 may be constructed from Swedish steel measuring 1/4 inch thick. Member 190 is made in the following manner. A flat sheet of material is provided and an opening is cut in it where member 192 is to be added. Also, the openings 196, 198 are made. These openings may be made by cutting the flat sheet of steel by use of a plasma cutting machine. After the flat sheet is cut, it is bent into the shape shown in the drawings. It is bent to assume the shape of a flanged channel except for the places 194, 196, 198 where the-cutouts have been made. In the central part of the frame member 74', outwardly on each side of the central cutout 194, the member 74' includes a web 199, a pair of flanges 200, 202 and a pair of lips 204, 206. Flanges 200, 202 extend substantially perpendicular to web 199 and lips 204, 206. Lips 204, 206 are in coplanar parallelism. Lips 204, 206 are perpendicular to flanges 200, 202 and are parallel to web 199. In the opposite end region which include the cutouts 196, 198, in the web 199, channel beams 208, 210, 212, 214 are formed. In the sections of the member 74', the flanges 200, 202 become webs and the lips 204, 206 become flanges. Also, the remaining side portions 216, 218, 220, 222 of the web 199 become lower flanges for the beam sections 208, 210, 212, 214. Member 192 is cut and then formed into the shape indicated. It is then set into the center cutout 194 and is welded to the inner edges of the web 199 and to the members 204, 206 and the members 200, 202. The member 192 forms a downwardly opening compartment in which the central portions of the cylinders are received. The frame members 76, 78 are welded to the sides 74' at the location shown in Fig. 3, for example.

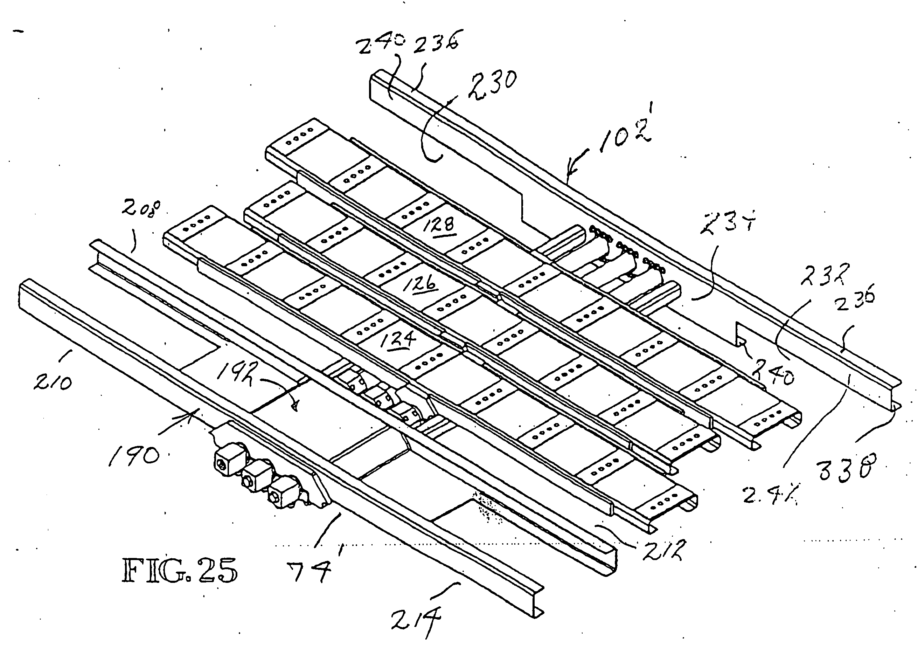

Referring to Fig. 25, the transverse mounting frame member 102' is also formed from a flat sheet of steel. For example, it may be formed from a sheet of Swedish steel that is about 3/6 inch thick. Regions 230, 232 are cut from the sheet and then the sheet is bent to form web 234 and flanges 236, 238, 240. Thus, the central portion of frame 102 has a channel shape with a deep web. The end portions each have a channel shape with a shallower web. The lower central portion may extend downwardly between two mainframe beams. The end channel 240, 242 first extend outwardly over the tops of the mainframe beams and then continue on to the side of the trailer or other installation in which the drive assembly is mounted.

The illustrated embodiments are examples of the present invention and, therefore, are non-limitive. It is to be understood that changes in the particular structure, materials and features of the invention may be made without departing from the scope of the invention as described by the following claims.

## Claims

1. A linear hydraulic drive unit, comprising: a transverse frame member (76) having a downwardly directed recess; a hydraulic cylinder (12) including a closed end and a rod end, **characterized by** further comprising a rod-end member (22) having a base (64), a radial end wall (68) extending upwardly from a portion of said base, and a key (66) above another portion of said base, said key extending axially from the radial end wall;
said rod-end member (22) including a piston rod opening (70) extending through the key and through a portion of the base;
said rod-end member (22) further including a nook (72) above the base and the key, said nook being bounded on one side by the radial end wall;
said base having a pair of shoulders, one on each side of the key, and a pair of bolt receiving openings (98) extending through the base and the shoulders;
said frame member having a key receiving recess (80) adapted to snugly receive the key (66), and having a side surface that is contiguous the radial end wall (68) of the rod-end member when the key is within the key recess;
said frame member (76) having a pair of shoulders, one on each side of the key recess;
said frame member shoulders confronting the shoulders on the rod-end member when the key is within the key recess and the side surface is contiguous the radial end wall of the rod-end member;
said frame member shoulders having bolt receiving openings (84) therein that are alignable with the bolt receiving openings (98) in the rod-end member when the key is within the key recess and the side surface of the frame member is contiguous the radial end wall; and
bolts (96) extendable through the bolt receiving openings (98) in said rod-end member and the bolt receiving openings (84) in said frame member shoulders; and
said bolts connect the rod-end member of the hydraulic cylinder to the transverse frame member.

2. The linear hydraulic drive unit of claim 1, comprising a second transverse frame member (78) having a downwardly directed recess (82) adjacent the closed end of the hydraulic cylinder;
said hydraulic cylinder having an end member (20) at its closed end, said end member having a radial wall portion (24) and a tubular nipple portion (26) extending axially outwardly from the radial wall portion, said radial wall portion including an outer surface extending radially outwardly from the nipple;
a removable clamp member (88) connectable to the second frame member (78), said clamp member including a recess (82) for receiving a portion of tubular nipple; said tubular nipple being received in the recess in the second frame member with the radial outer surface of the radial wall portion of the end member being contiguous a surface of the second frame member bordering the recess in the second frame member;
said recess in said removable clamp member receiving a portion of said tubular nipple that is not within the recess in the second frame member;
said clamp member having a radial side surface that is contiguous the outer surface of the radial wall portion of said end member; and
bolts (94) removably connecting the clamp member to the frame member, with the tubular nipple portion of the end member being received in and clamped by and between the recess in the second frame member and the recess in the clamp member.

3. The linear hydraulic drive unit of claim 2, wherein the tubular nipple (26) includes a center opening (28) and a tubular fitting (32) is received within said center opening, said tubular fitting provided a passageway of hydraulic fluid entering into and leaving from the piston chamber at the closed end of the hydraulic cylinder.

4. The linear hydraulic drive unit of claim 3, wherein the fitting includes a valve and a valve operator (38) that extends axially into the piston chamber and includes an inner end portion that is adapted to be contacted by the piston head, wherein when the piston head is retracted in the piston chamber, it contacts the inner end of the valve operator and moves the valve operator outwardly and in response to such movement the valve operator opens the valve, said valve being normally closed when the piston head is not depressing the valve operator.

5. The linear hydraulic drive unit of claim 4, wherein the valve includes a valve seat (40) and a valve plug (36) outwardly of the valve seat that is connected to the outer end of the valve operator (38), and the valve also includes a compression spring (42) operating to normally seat the valve plug (36) against the valve seat (40).

6. The linear hydraulic drive unit of claim 2, wherein an outer surface of the tubular nipple (26), the recess in said transverse frame member (78) and the recess in the removable clamp member (88) having complementary interlocking surfaces which function to prevent axial movement of the hydraulic cylinder relative to the transverse frame member and the removable clamp member.

## Patentansprüche

1. Lineare hydraulische Antriebseinheit, umfassend:
ein transversales Rahmenelement (76), das eine nach oben gerichtete Ausnehmung hat; einen Hydraulikzylinder (12) mit einem geschlossenen Ende und einem Stangenende, **dadurch gekennzeichnet, dass** sie ferner umfasst:
ein Element (22) für das Stangenende, das einen Grundaufbau (64) hat, eine radiale Stirnwand (68), die sich von einem Abschnitt des Grundaufbaus nach oben erstreckt und eine Aufnahme (66) oberhalb eines anderen Abschnitts des Grundaufbaus, wobei die Aufnahme sich axial von der radialen Stirnwand erstreckt;
wobei das Element (22) für das Stangenende eine Kolbenstangenöffnung (70) aufweist, die sich durch die Aufnahme und durch einen Abschnitt des Grundaufbaus erstreckt;
wobei das Element (22) für das Stangenende ferner einen Winkel (72) oberhalb des Grundaufbaus und der Aufnahme aufweist, wobei der Winkel an einer Seite durch die radiale Stirnwand begrenzt ist;
wobei der Grundaufbau ein Paar Schultern hat, und zwar eine an jeder Seite der Aufnahme, und ein Paar bolzenaufnehmende Öffnungen (98), die sich durch den Grundaufbau und die Schultern erstrecken;
wobei das Rahmenelement eine Ausnehmung (80) zum Aufnehmen der Aufnahme hat, die ausgelegt ist, um die Aufnahme (66) raumfest aufzunehmen, und eine Seitenfläche hat, die angrenzt an der radialen Stirnwand (68) des Elements für das Stangenende, wenn sich die Aufnahme innerhalb der Ausnehmung für die Aufnahme befindet;
wobei das Rahmenelement (76) ein Paar Schultern hat, und zwar eine an jeder Seite der Ausnehmung für die Aufnahme;
wobei die Schultern des Rahmenelements den Schultern an dem Element für das Stangenende gegenüberliegen, wenn die Aufnahme sich innerhalb der Ausnehmung für die Aufnahme befindet und die Seitenfläche an der radialen Stirnwand des Elements für das Stangenende angrenzt;
wobei die Schultern des Rahmenelements bolzenaufnehmende Öffnungen (84) darin haben, die zum Fluchten bringbar sind mit dem bolzenaufnehmenden Öffnungen (98) in dem Element für das Stangenende, wenn die Aufnahme sich innerhalb der Ausnehmung für die Aufnahme befindet und die Seitenfläche des Rahmenelements an der radialen Stirnwand angrenzt; und
wobei Bolzen (96) durch die bolzenaufnehmenden Öffnungen (98) in dem Element für das Stangenende und die bolzenaufnehmenden Öffnungen (84) in den Schultern des Rahmenelements erstreckbar sind; und
wobei die Bolzen das Element für das Stangenende des Hydraulikzylinders mit dem transversalen Rahmenelement verbinden.

2. Lineare hydraulische Antriebseinheit nach Anspruch 1, umfassend ein zweites transversales Rahmenelement (78), das eine nach unten gerichtete Ausnehmung (82), angrenzend an dem geschlossenen Ende des Hydraulikzylinders, hat;
wobei der Hydraulikzylinder ein Endteil (20) an seinem geschlossenen Ende hat, wobei das Endteil einen radialen Wandabschnitt (24) und einen rohrförmigen Nippelabschnitt (26) hat, der sich axial von dem radialen Wandabschnitt nach außen erstreckt, wobei der radiale Wandabschnitt eine Außenfläche aufweist, die sich von dem Nippel radial nach außen erstreckt;
ein lösbares Klemmelement (88), das mit dem zweiten Rahmenelement (78) verbindbar ist, wobei das Klemmelement eine Ausnehmung (82) zum Aufnehmen eines Abschnitts des rohrförmigen Nippels aufweist; wobei der rohrförmige Nippel in der Ausnehmung in dem zweiten Rahmenelement aufgenommen ist und die radiale Außenfläche des radialen Wandabschnitts des Endteils angrenzt an einer Oberfläche des zweiten Rahmenelements, angrenzend an der Ausnehmung in dem zweiten Rahmenelement;
wobei die Ausnehmung in dem lösbaren Klemmelement einen Abschnitt des rohrförmigen Nippels aufnimmt, der nicht innerhalb der Ausnehmung in dem zweiten Rahmenelement liegt;
wobei das Klemmelement eine radiale Seitenfläche hat, die angrenzt an der Außenfläche des radialen Wandabschnitts des Endteils; und
wobei Bolzen (94) lösbar das Klemmelement mit dem Rahmenelement verbinden, wobei der rohrförmige Nippelabschnitt des Endteils aufgenommen ist in und festgeklemmt ist durch und zwischen der Ausnehmung in dem zweiten Rahmenelement und der Ausnehmung in dem Klemmelement.

3. Lineare hydraulische Antriebseinheit nach Anspruch 2, wobei der rohrförmige Nippel (26) eine zentrale Öffnung (28) aufweist und ein rohrförmiges Fitting (32) innerhalb der zentralen Öffnung aufgenommen ist, wobei das rohrförmige Fitting einen Durchgang für Hydraulikfluid vorsieht, das in die Kolbenkammer eintritt und diese an dem geschlossenen Ende des Hydraulikzylinders verlässt.

4. Lineare hydraulische Antriebseinheit nach Anspruch 3, wobei das Fitting ein Ventil sowie ein Ventilbedienteil (38) aufweist, das sich axial in der Kolbenkammer erstreckt und ein inneres Endteil aufweist, das ausgelegt ist, um von dem Kolbenkopf kontaktiert zu werden, wobei, wenn der Kolbenkopf in der Kolbenkammer zurückgezogen ist, er das innere Ende des Ventilbedienteils kontaktiert und das Ventilbedienteil nach außen bewegt und in Reaktion auf eine derartige Bewegung das Ventilbedienteil das Ventil öffnet, wobei das Ventil normalerweise geschlossen ist, wenn der Kolbenkopf das Ventilbedienteil nicht niederdrückt.

5. Lineare hydraulische Antriebseinheit nach Anspruch 4, wobei das Ventil einen Ventilsitz (40) und ein Ventilküken (36) nach außen von dem Ventilsitz aufweist, das mit dem äußeren Ende des Ventilbedienteils (38) verbunden ist und das Ventil auch eine Kompressionsfeder (42) aufweist, die so arbeitet, dass sie normalerweise das Ventilküken (36) gegen den Ventilsitz (40) setzt.

6. Lineare hydraulische Antriebseinheit nach Anspruch 2, wobei eine Außenfläche des rohrförmigen Nippels (26), die Ausnehmung in dem transversalen Rahmenelement (78) und den Ausnehmungen in dem lösbaren Klemmelement (88) komplementäre, ineinandergreifende Oberflächen haben, die so funktionieren, dass sie eine axiale Bewegung des Hydraulikzylinders relativ zu dem transversalen Rahmenelement und dem lösbaren Klemmelement verhindern.

## Revendications

1. Unité d'entraînement hydraulique linéaire, comprenant :
un élément formant châssis transversal (76) ayant un évidement dirigé vers le bas ; un cylindre hydraulique (12) ayant une extrémité fermée et une extrémité côté tige, **caractérisée en ce qu'**elle comprend en outre un élément d'extrémité côté tige (22) ayant une base (64), une paroi d'extrémité radiale (68) s'étendant vers le haut à partir d'une portion de ladite base, et une clavette (66) située au-dessus d'une autre partie de ladite base, ladite clavette s'étendant axialement à partir de la paroi d'extrémité radiale;
ledit élément d'extrémité côté tige (22) présentant une ouverture de tige de piston (70) s'étendant à travers la clavette et à travers une portion de la base ;
ledit élément d'extrémité côté tige (22) comprenant en outre un renfoncement (72) situé au-dessus de la base et de la clavette, ledit renfoncement étant limité d'un côté par la paroi d'extrémité radiale ;
ladite base ayant une paire d'épaulements, un de chaque côté de la clavette, et une paire d'ouvertures (98) de réception de boulon s'étendant à travers la base et les épaulements
ledit élément formant châssis ayant un évidement (80) de réception de clavette adapté pour recevoir étroitement la clavette (66) et ayant une surface latérale qui est contiguë à la paroi d'extrémité radiale (68) de l'élément d'extrémité côté tige lorsque la clavette est dans l'évidement de clavette ;
ledit élément formant châssis (76) ayant une paire d'épaulements, un de chaque côté de l'évidement de clavette ;
lesdits épaulements de l'élément formant châssis étant en regard des épaulements formés sur l'élément côté tige lorsque la clavette est dans l'évidement de clavette et que la surface latérale est contiguë à la paroi d'extrémité radiale de l'élément d'extrémité côté tige;
lesdits épaulements de l'élément formant châssis ayant intérieurement des ouvertures (84) de réception de boulon qui peuvent être alignées avec les ouvertures (98) de réception de boulon ménagées dans l'élément d'extrémité côté tige lorsque la clavette est dans l'évidement de clavette et que la surface latérale de l'élément formant châssis est contiguë à la paroi d'extrémité radiale ; et
des boulons (96) pouvant être enfilées à travers les ouvertures (98) de réception de boulon ménagées dans l'élément d'extrémité côté tige et les ouvertures (84) de réception de boulon ménagées dans lesdits épaulements de l'élément formant châssis ; et
lesdits boulons relient l'élément d'extrémité côté tige du cylindre hydraulique à l'élément formant châssis transversal.

2. Unité d'entraînement hydraulique linéaire selon la revendication 1, comprenant un second élément formant châssis transversal (78) ayant un évidement (82) dirigé vers le bas adjacent à l'extrémité fermée du cylindre hydraulique ;
ledit cylindre hydraulique ayant un élément d'extrémité (20) à son extrémité fermée, ledit élément d'extrémité ayant une portion de paroi radiale (24) et une portion formant manchon tubulaire (26) qui s'étend axialement vers l'extérieur à partir de la portion de paroi radiale, ladite portion de paroi radiale comprenant une surface extérieure qui s'étend radialement vers l'extérieur à partir du manchon ;
un élément de serrage amovible (88) pouvant être relié au second élément formant châssis (78), ledit élément de serrage présentant un évidement (82) destiné à recevoir une portion du manchon tubulaire ; ledit manchon tubulaire étant reçu dans l'évidement ménagé dans le second élément formant châssis et la surface radialement extérieure de la portion de paroi radiale de l'élément d'extrémité étant contiguë à une surface du second élément formant châssis qui borde l'évidement ménagé dans le second élément formant châssis ;
ledit évidement ménagé dans ledit élément de serrage amovible recevant une portion dudit manchon tubulaire qui ne se trouve pas dans l'évidement ménagé dans le second élément formant châssis ;
ledit élément de serrage ayant une surface latérale radiale qui est contiguë à la surface extérieure de la portion de paroi radiale dudit élément d'extrémité ; et
des boulons (94) qui relient l'élément de serrage à l'élément formant châssis de façon amovible, la portion formant manchon tubulaire de l'élément d'extrémité étant reçue et serrée par et entre l'évidement ménagé dans le second élément formant châssis et l'évidement ménagé dans l'élément de serrage.

3. Unité d'entraînement hydraulique linéaire selon la revendication 2, dans laquelle le manchon tubulaire (26) présente une ouverture centrale (28) et un raccord tubulaire (32) est reçu dans ladite ouverture centrale, ledit raccord tubulaire formant un passage pour un fluide hydraulique qui entre dans la chambre de piston et en sort à l'extrémité fermée du cylindre hydraulique.

4. Unité d'entraînement hydraulique linéaire selon la revendication 3, dans laquelle le raccord comprend une soupape et un actionneur de soupape (38) qui s'étend axialement en pénétrant dans la chambre de piston et comprend une portion d'extrémité intérieure qui est adaptée à être en contact avec la tête du piston, et dans laquelle, lorsque la tête du piston est rétractée dans la chambre du piston, elle se met au contact de l'extrémité intérieure de l'actionneur de soupape et déplace l'actionneur de soupape vers l'extérieur et, en réponse à ce mouvement, l'actionneur de soupape ouvre la soupape, ladite soupape étant normalement fermée lorsque la tête de piston ne repousse pas l'actionneur de soupape.

5. Unité d'entraînement hydraulique linéaire selon la revendication 4, dans laquelle la soupape comprend un siège de soupape (40) et un élément mobile de soupape (36) situé à l'extérieur par rapport au siège de soupape et qui est relié à l'extrémité extérieure de l'actionneur de soupape (38), et la soupape comprend aussi un ressort de compression (42) qui a pour effet d'appuyer normalement l'élément mobile de soupape (36) contre le siège de soupape (40).

6. Unité d'entraînement hydraulique linéaire selon la revendication 2, dans laquelle une surface extérieure du manchon tubulaire (26), l'évidement ménagé dans l'élément formant châssis transversal (78) et l'évidement ménagé dans l'élément de serrage amovible (88) ont des surfaces de verrouillage complémentaires qui ont pour fonction d'empêcher un mouvement axial du cylindre hydraulique par rapport à l'élément formant châssis transversal et à l'élément de serrage amovible.
